# EUROPEAN PATENT SPECIFICATION

(11) **EP 0 444 062 B1**
(45) Date of publication and mention of the grant of the patent: **06.12.1995**
(21) Application number: 89912317.8
(22) Date of filing: 27.10.1989
(51) Int. Cl.: G11B 21/22

(54) **MAGNETIC PARKING DEVICE FOR DISK DRIVE**
MAGNETISCHE LAGEANORDNUNG FÜR EINE PLATTENEINHEIT
DISPOSITIF DE POSITIONNEMENT MAGNETIQUE POUR UNITE DE DISQUES

(30) Priority: 10.11.1988 US 269873
(43) Date of publication of application: 04.09.1991
(73) Proprietor: CONNER PERIPHERALS, INC., San Jose, CA 95134-2158 (US)
(72) Inventor: STEFANSKY, Frederick, Mark, Longmont, CO 80501 (US)
(74) Representative: Wright, Hugh Ronald
(86) International application number: US8904835
(87) International publication number: WO9005359

(56) References cited:
- FR-A- 2 528 213
- US-A- 4 635 151
- US-A- 4 639 863
- US-A- 4 660 120
- US-A- 4 706 142
- US-A- 4 710 834
- US-A- 4 853 807
- IBM Technical Disclosure Bulletin, Vol. 19 No. 4, September 1976, A.R. HEARN,"Actuator Retraction Device", page 1440.

## Description

### CROSS-REFERENCE TO RELATED APPLICATIONS

LOW HEIGHT DISK DRIVE, Serial No. 147,804, filed January 25, 1988, inventor Frederick Mark Stefansky, assigned to the assignee of the present application;
DISK DRIVE ARCHITECTURE, Serial No. 056,584, filed May 29, 1987, inventors Frederick Mark Stefansky and Glade N. Bagnell, assigned to the assignee of the present application;
DISK DRIVE SOFTWARE SYSTEM ARCHITECTURE, Serial No. 057,806, filed June 2, 1987, inventors John P. Squires, Thomas A. Fiers and Louis J. Shrinkle, assigned to the assignee of the present application;
DISK DRIVE SOFTWARE SYSTEM ARCHITECTURE UTILIZING IMBEDDED REAL TIME DIAGNOSTIC MONITOR, Serial No. 058,289, filed June 2, 1987, inventors John P. Squires, Thomas A. Fiers and Louis J. Shrinkle, assigned to the assignee of the present application.

### BACKGROUND OF THE INVENTION

### Field of the Invention.

The present invention relates to parking devices for disk drives; more particularly, to devices which position and retain the head(s) of a disk drive over a selected portion of a hard (or fixed) disk when the disk drive is not in use.

### Description of the Related Art.

Developments in personal computers, portable computers and lap top computers have prompted reductions in the size and increases in the memory capacity of disk drives. Factors which hamper the incorporation and use of fixed or hard disks in lap-top computers include the size, weight, and power consumption of hard disk drives. The desire to operate portable computers on battery supplied power, and the reduction of the life of the batteries by each power consuming component of a computer, have prompted efforts to reduce the power consumed by disk drives intended for use in portable computers.

Conventional hard disk drives often incorporate a device for parking the head(s) of the drive. As used in this patent, the terms "park" and "parking" refer to the maintaining the position of the head(s) over a selected portion (usually a "landing zone" at the inside or outside diameter) of the disk (or disks). The heads are supported by an actuator, and parking the heads also means parking the actuator by fixing the position of the actuator which supports the heads.

In conventional disk drives, a head "flys" over the surface of a disk, riding on the stream of air created by the rotation of the disk. When the disk stops rotating, for example, when power is turned off, the head lands on the disk. If the head lands on a portion of the disk which is used to store data, there is a possibility that the disk, and thus the data stored on the disk, will be damaged. Parking the head(s) is particularly important in portable computers, in which the disk drive may be continually subject to large physical shocks during transportation. Non-operational physical shocks, for example, shocks experienced during transportation of portable computers or shipping may cause the heads to "slap" against the disk, possibly causing a loss of data if the head slaps against a data-carrying portion of the disk. Parking the head assures that the head will land on a landing zone -- i.e., a non-data storage portion of the disk-- and will be held in a position over the landing zone during the power-down period.

Various types of parking (or latching) devices have been used to lock the actuator arm of a voice coil in a selected position when the disk drive is not operating. Many parking devices incorporate a latch which physically engages the actuator arm and utilizes a spring to bias a pivoting latch arm to a parked position and an electromagnet to releast the latch during operation of the drive. The use of an electromagnet to release the latch requires the continual use of electrical power to maintain the latch in the unlatched position. Further, an electromagnet generates heat which is not desirable in a disk drive or any other area in a computer.

Air activated parking devices rely on the air flow generated by the rotating disks to release a spring biased latch arm. Air activated parking devices pose the problem of interference with the air flow necessary for the heads to fly properly. Further, the amount of force generated by the air flow is related to the surface area of the disks, and as disks are reduced in size, the amount of air flow may be insufficient to release a latch mechanism.

Solenoids have also been used to release latch arms which are spring biased. As with an electromagnet, a solenoid requires a constant supply of electrical current, and the residual magnetism of the plunger must be overcome by the biasing force.

Such parking devices often utilize pivoting latch arms which often present design, manufacturing, and operational problems related to, for example, balancing the latch arm to provide proper functioning of the latch for all orientations of the disk drive. A latch which does not operate properly for all orientations of the disk drive is not suitable for use in a portable or lap-top computer.

Reliability of electromagnetic parking devices which attract a permeable member requires overcoming any residual magnetism in the permeable member, prompting the use of larger bias springs. However, larger spring forces demand greater electrical power to energize an electromagnet which reliably overcomes the spring force. Purely magnetic parking devices park the actuator by the attraction by a magnet of a magnetically permeable portion of the actuator. Such parking devices have provided direct contact between the magnetically permeable portion of the actuator and the magnet. The primary drawback of a magnetic latch of this type is that the rotational movement of the actuator is adversely affected by the attraction of the magnetically permeable portion of the actuator and the magnet, thereby creating problems with the track following and seek functions. Further, an extremely large force is required to release the actuator from the magnet.

A magnetic parking device is described in IBM Technical Disclosure Bulletin, Vol. 19, No. 4. Sept. 1976, A.R. Hearn, "Actuator Retraction Device" page 1440. This discloses a magnetic device which biases an actuator of a magnetic disk drive in a retract position, and in the absence of drive currents, holds the actuator in this position. The retraction function is performed automatically by a rectangular shaped thin film of ferrite or some other soft magnetic material with a high electrical resistance attached to the inside of the actuator. By virtue of its shape, the film reduces the magnetic gap reluctance linearly as the actuator moves in a stator towards the retracted position. There is no description in this disclosure of a method or means to contain the magnetic flux lines of the stator.

Each component of a disk drive represents an increase in the weight of the drive, the space occupied by the drive, and the manufacturing effort. A large number of mechanical components, particularly the moving components of a latch mechanism, increases the possibility and probability of a mechanical failure of the drive. The number and complexity of mechanical components is also related to the ability of the drive to survive physical shocks and vibrations.

### SUMMARY OF THE INVENTION

We will describe a parking device for a disk drive which does not use any electrical power during operation of the disk drive.

We will describe a parking device which requires an minimum amount of space in the disk drive.

We will describe a parking device which magnetically captures (or parks) the actuator of a disk drive.

We will describe a parking device which parks the actuator without relying on physical latching of the parking device and the actuator.

We will describe a magnetic parking device which provides a "black hole" magnetic effect; the black hole effect concentrates a magnetic field in an interactive region where the magnetic field captures an actuator and substantially eliminates the leakage of the magnetic field outside of the interactive region.

We will describe a magnetic parking device including a magnetic unit which contains a magnetic field and which captures the actuator only when the actuator is located within a slot (air gap) in the magnetic unit.

We will describe a magnetic parking device which does not utilize any moving parts other than the actuator arm.

We will describe a magnetic parking device which is easy to assemble in a disk drive.

The present invention provides a magnetic parking device for a disk drive having a data storage medium, a transducer for reading information from and writing information to the data storage medium, and an actuator for selectively positioning the transducer over a path between a first point and a second point with respect to the data storage medium, comprising; a magnetically permeable capture member provided on the actuator; and magnetic parking means provided adjacent to the actuator for capturing and magnetically retaining said capture member to park the transducer, said magnetic parking means comprising a magnet providing a magnetic field; and a magnetic field containing member having an air gap; characterised in that said air gap comprises a slot in said magnetic field containing member; and the magnetic field flux lines of said magnetic field in said magnetic field containing member are substantially parallel to the length of the slot in said magnetic field containing member so that the magnetic field captures the actuator only when the actuator enters the slot in said magnetic field containing member, whereby the capture member is in a non-permeated state over a first portion of the path of the actuator, and the capture member switches to a permeated state over a second portion of the actuator path such that the capture member is positioned proximate to the magnetic parking means and in the magnetic field.

The present invention also provides a low-power disk drive responsive to a host computer, comprising; a base plate, a rotatable disk supported on said base plate, said disk having a landing zone; control means for generating control signals; means, responsive to control signals, for interacting with said disk, comprising; head means for reading and recording information, an actuator arm pivotably supported on said base plate for supporting said head means, and voice coil means for pivoting said actuator arm to selectively position said head means with respect to said disk; a permeable capture member provided on said actuator arm; and parking means for parking said head means, including; magnet means for creating a magnet field, and a magnet field containing member having an air gap; characterised in that; said air gap comprises a slot in said magnetic containing member; the magnetic field flux lines of said magnetic field in said magnetic field containing member are substantially parallel to the length of the slot in said magnetic field containing member so that the magnetic field captures the actuator only when the actuator enters the slot in said magnetic field containing member.

### BRIEF DESCRIPTION OF THE DRAWINGS

Fig. 1A is an isometric view of an embodiment of a magnetic unit of a parking device not in accordance with the present invention;
Figure 1B is an end view of the magnetic unit shown in Fig. 1A;
Figure 2A is an isometric view of an embodiment of a magnetic unit of a parking device in accordance with the present invention;
Fig. 2B is an end view of the magnetic unit shown in Fig. 2A;
Fig. 3 is an isometric view of a disk drive including a parking device in accordance with the present invention;
Fig. 4 is a partial plan view of the disk drive including a parking device in accordance with the present invention;
Fig. 5 is a partial. end view along line 5-5 in Fig. 4;
Figs. 6A-B are sectional views along line 6-6′ in Fig. 2A for describing the operation of a parking device having a magnetic unit of the present invention; and
Fig. 7 is a diagram for explaining the advantages of the embodiment of the magnetic unit in accordance with the invention.

### DESCRIPTION OF THE PREFERRED EMBODIMENT

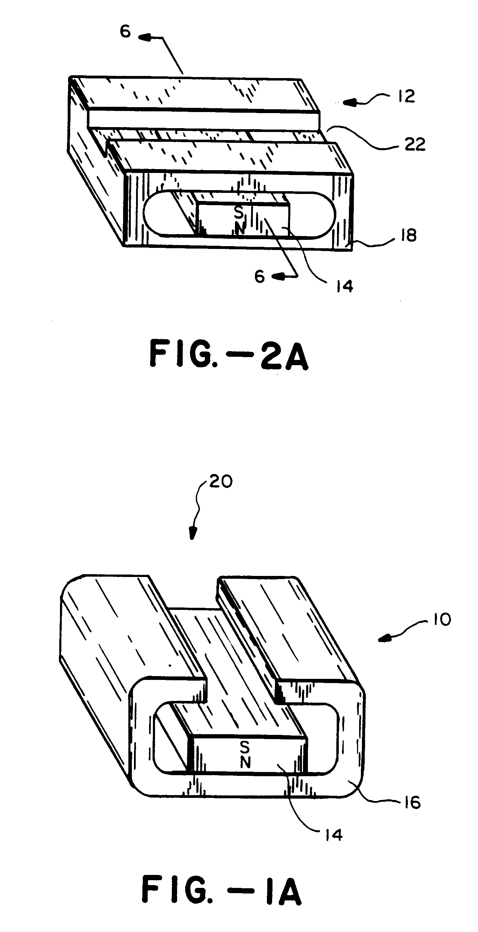

A disk drive including a magnetic parking device according to the present invention will be described with reference to Figs. 1-7. The disk drive described herein includes, for example, a single hard disk with a magnetic coating and utilizes Winchester technology; however, the disk drive may utilize various numbers of disks (and a corresponding number of heads, usually one per disk surface -- two (2) heads per disk) and other types of disks, for example, optical disks, and other read/write technologies, for example, lasers.

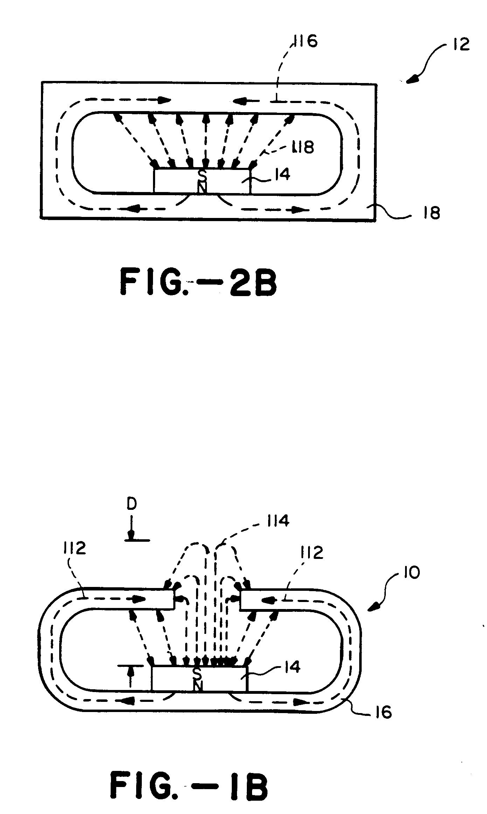

The use of a magnetic field to park the heads in a disk drive, as opposed to a mechanical latch, eliminates the need for an electromagnetic or air activated device to release the mechanical latch during operation of the disk drive. Magnetic parking units 10,12 are shown in Figs. 1 and 2. As set out above the parking unit 10 is not in accordance with the present invention, the parking unit 12 forming a preferred embodiment of the invention. Each magnetic parking unit 10,12 includes a magnet 14 and a magnetic field containing member 16,18 for containing and providing a return for the magnetic field produced by the magnet 14. An air gap (or slot) 20,22 in the field containing member 16,18 provides a region of high magnetic field intensity. The actuator of a disk drive is captured when a magnetically permeable portion of the actuator enters the air gap 20,22. The disk drive is constructed so that the head(s) are parked when the actuator is captured.

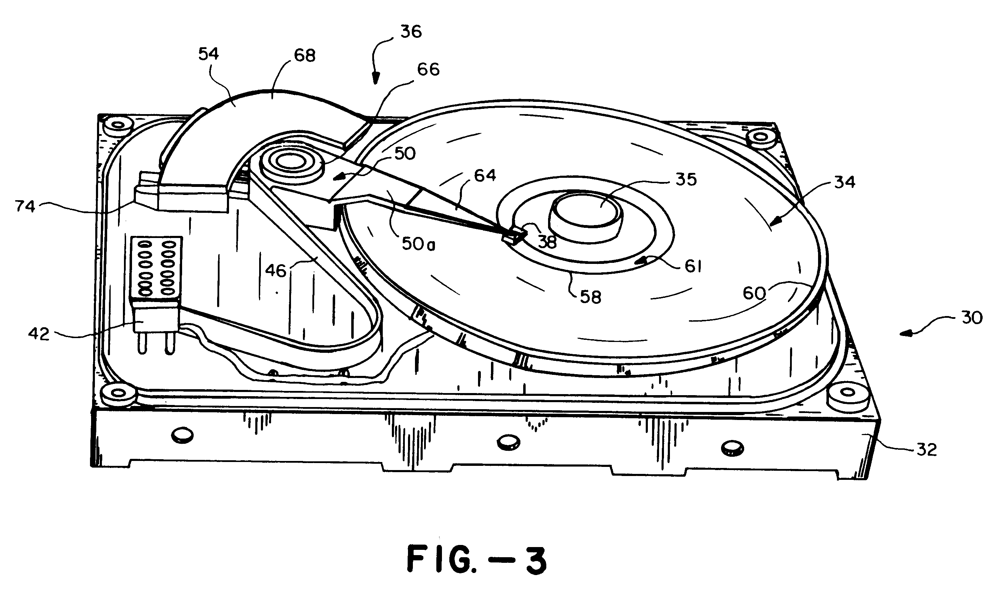

A disk drive 30 including the magnetic parking device of the present invention will be described with reference to Figs. 3 and 4. For the purposes of describing the magnetic parking device of the present invention, disk drive 30 will be described in broad terms. Details of disk drives which may use a magnetic parking device in place of other latching devices are disclosed in above-identified, co-pending Applications Serial Nos. 147,804 and 056,584, which are hereby incorporated by reference.

Disk drive 30 has a baseplate for supporting internal components of the drive and external electronic circuitry. The internal components may be identified as three inter-related groups: disk 34 and spin motor 35, actuator assembly 36 for positioning head(s) 38 with respect to disk 34, and header assembly 40 including header 42, bracket 44, and flex circuit 46.
A cover (not shown) is sealably attached to base plate 32 to provide a controlled environment between base plate 32 and the cover.

Actuator assembly 36 includes pivotable actuator arm 50, heads 38 mounted at a first end 50a of actuator arm 50, an actuator coil 52 mounted on actuator sub-arms 50-1, 50-2 at a second end 50b of actuator arm 50; the first and second actuator arm portions 50a, 50b are located on opposite sides of the pivot point of the actuator arm 50. A magnet structure 54 supports magnets 56a, b and the components of magnet structure 54, as described in detail below, are formed of magnetically permeable material to provide returns for the magnetic fields generated by magnets 56 a, b. The magnet structure 54 and actuator coil 52 are arranged so that a current in coil 52, in the presence of the magnetic fields created by magnets 56, creates a force which pivots actuator arm 50. Currents passing in opposite directions in coil 52 create torques in opposite directions. The pivoting of the actuator arm 50 positions head 38 at selected locations with respect to disk 34.

Disk 34, which is rotated by spin motor 35, has specified inside and outside diameters 58 and 60 and a landing zone (or non-data area) 61 located, e.g., adjacent to the inside diameter 58. The landing zone 61 may be any selected portion of the disk 34; however, a portion of the disk 24 adjacent to the inside 58 or outside diameter 60 is usually selected.

A printed circuit assembly (or control means) 62 is attached to the bottom of base plate 12. Header 42 carries electrical signals from the printed circuit assembly 62 to the controlled internal environment.

The structure and operation of actuator assembly 36 will be explained with reference to Figs. 3-5. The function of the actuator assembly 36 is to selectively position heads 38 with respect to the surfaces of disk(s) 34 by pivoting actuator arm assembly 50. More specifically, to position the heads 38 over individual tracks on disk(s) 34. Heads 38 are supported on actuator arm 50 by a load beam 64 and a flexure (not shown) provided between load beam 64 and heads 38. A bearing assembly 66 is inserted in actuator arm 50 to provide a pivot point. Actuator arm 50, including all of the components attached thereto, is precisely balanced, i.e., equal amounts of weight are provided on either side of the pivot point so that the positioning of heads 38 is less susceptible to linear shock and vibration.

Magnet structure 54, which in conjunction with coil 52 comprises a voice coil assembly, includes top and bottom plates 68, 70 formed of magnetically permeable material, support posts 72, 74 also formed of magnetically permeable material, and first and second magnets 56a, b attached to the top plate 68. Top and bottom plates 68, 70 in conjunction with support posts 68, 70, function as returns for the magnetic fields provided by first and second magnets 56a, b. It is important that there are no air gaps between support posts 72, 74 and either the top or bottom plate 68, 70; any air gap would create a discontinuity in the return, greatly reducing the strength of the magnetic field.

First and second magnets 56a, b have opposite poles attached to top plate 64 (e.g., the south pole of first magnet 56a and the north pole of second magnet 56b are attached to top plate 68) to provide first and second magnetic fields B₁, B₂ between respective ones of the first and second magnets 56a, b and bottom plate 70. First and second magnetic fields B₁, B₂, are encompassed in three closed magnetic field loops including various portions of top plate 68, bottom plate 70, and first and second support posts 72, 74. By containing the magnetic fields B₁ and B₂, in returns, the magnetic field intensity of each field is increased in the region between the respective first and second magnets 56a, b and bottom plate 70; the strength of the magnetic field in this region is directly related to the torque which the voice coil exerts on the actuator arm 50, and thus the rotational velocity of actuator arm 50 and the seek times for the drive.

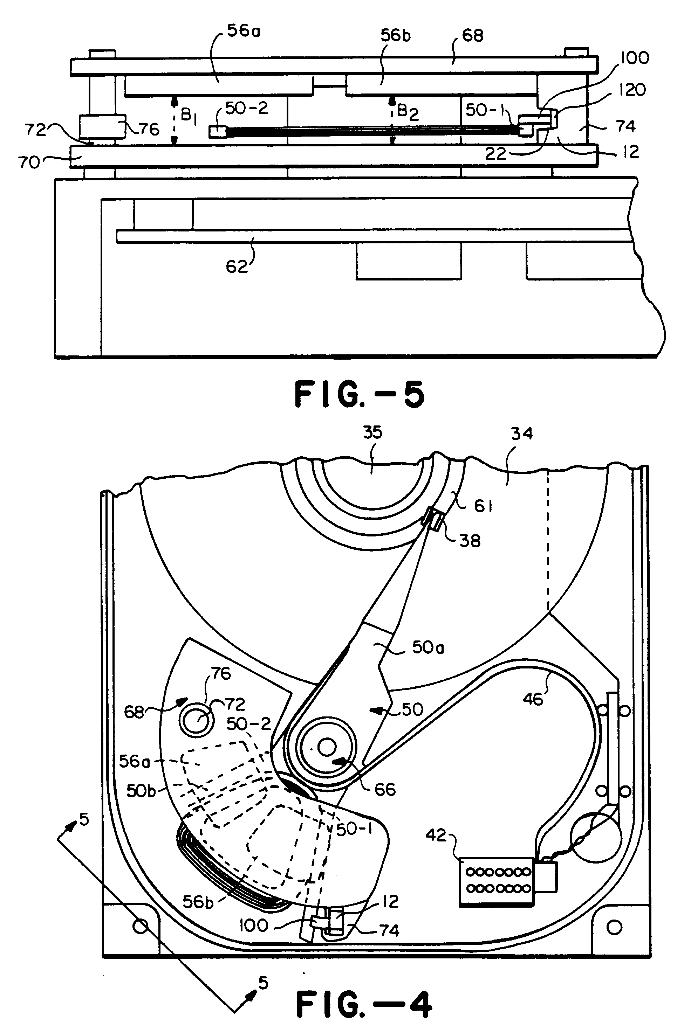

Crash stops are provided to limit the pivoting movement of actuator arm 50 so that heads 38 travel only between the inside and outside diameters 58, 60 of disk 34. Outside diameter crash stop is provided by a sleeve 76 (Fig. 5) fitted on support post 72. When the pivoting motion of actuator arm 50 places heads 38 at the outside diameter 60 of disk 34 a portion of the actuator sub-arm 50-2 contacts outside diameter crash stop 76, thereby preventing movement of the heads 38 beyond the outside diameter 60. An inside diameter crash stop is provided by the portion of the magnetic latch mechanism and is described below.

A reverse flex circuit 46 carries electrical signals from header 42 to heads 38 and actuator assembly 36. The reverse flex circuit 46 may be separated into three portions; a first portion 80 carrying current to actuator coil 52 and a second portion 82 which is a ground plane separating the current carrying portion 80 from a third data carrying portion 84. The data carrying portion 84 provides signals to heads 38 for recording information on disk 34 and carries signals from the heads 38 to the printed circuit assembly 62, via header 42, when reading data from disk 34. Ground plane 82 prevents interference with the relatively weak data signals which would otherwise be caused by the larger currents necessary for actuator coil 52 passing through the first portion 80 of the reverse flex circuit 46.

The reverse flex circuit 46 is designed to exert only a minimal amount of rotational force (torque) on the actuator arm 50. Any torque exerted on actuator arm 50 by any means other than the voice coil assembly affects the function of actuator assembly 36 in positioning heads 38 with respect to disk 34, particularly the track following and seek functions described in the above-identified co-pending US Patent Applications, Serial Nos. 057,806 and 058,289. The force provided by the voice coil assembly must be controlled to compensate for the force exerted by the reverse flex circuit 46.

A magnetic parking device for parking the heads 38, i.e., locking the actuator arm 50 in an orientation where heads 38 are positioned, for example, at the inside diameter 58 of disk 34, will be described with reference to Figs. 1-7. During power-down of the disk drive 30, control means 62 causes actuator assembly 36 to pivot the actuator arm 50 to the position where the heads 38 are over the landing zone 61 of disk 34 before the rotational speed of the disk 34 is decreased to the point where the heads 38 land on the disk 34.

A magnetic parking device in accordance with the present invention includes a magnetic unit 12 supported by or incorporated in, for example, support post 74. The elevation, i.e., vertical position, and the location, i.e., horizontal position in the x-y plane, of the magnetic unit 12 is selected so that a magnetically permeable capture member 100, which may comprise a portion of actuator arm 50 or an element attached thereto, enters air gap 22 in magnetic unit 12 when the actuator arm 50 is rotated so that heads 38 are positioned over the landing zone 61. In the preferred embodiment of the present invention, the magnetic unit 12 is positioned so that it is outside of the magnetic flux circuits of fields B₁,B₂ produced by magnets 56a, b. These magnetic flux circuits are contained in the top and bottom plates 68,70, and thus the magnetic unit 12 is outside of the gap between these plates 69,70. The magnetic field in the air gap 22 of magnetic unit 12 captures capture member 100 to retain actuator arm 50 and to park the heads 38 without contact between capture member 100 and magnet 14.

In the embodiment of Figures 1A and 1B, the magnetic field retaining member 16 has an air gap 20 which is substantially perpendicular to the magnetic flux paths 112 of the magnetic field passing through the magnetic field retaining member 16. The inventor of the present invention has discovered that the magnetic flux lines 1,4 associated with such an air gap 20 in a magnetic field containing member 16 extends outside of air gap 20 (as shown in Fig 1B) due to a phenomenon known as fringing. The fringing results in leakage of the magnetic field. Further, the air gap 20 interrupts the magnetic circuit in field containing member 16.

Leakage of the magnetic field 114 outside of the air gap 20 of field containing member 16 requires that magnetic unit 10 must be positioned so that actuator arm 50, particularly portion 100 thereof, does not enter then magnetic field leakage 114 during operation of the disk drive. As a result, the portion of disk 34 over which the head would be positioned while the actuator arm 50 is in the leakage magnetic field 114 is not usable as a data area since the partial retention of actuator arm 50 by magnetic unit 10 would adversely affect the seek functions provided by actuator assembly 36. Specifically, the algorithms for controlling the track following and seek functions account for frictional forces and the rotational inertia of actuator arm 50 and the forces exerted by flex circuit 46; however, the intervention of an external magnetic field, which would tend to increase the rotational speed of actuator arm 50 when the head is moving toward the inside diameter 58 and decrease the rotational speed of actuator arm 50 when the head is moving away from inside diameter 58, would be difficult to implement and could be detrimental to seek times.

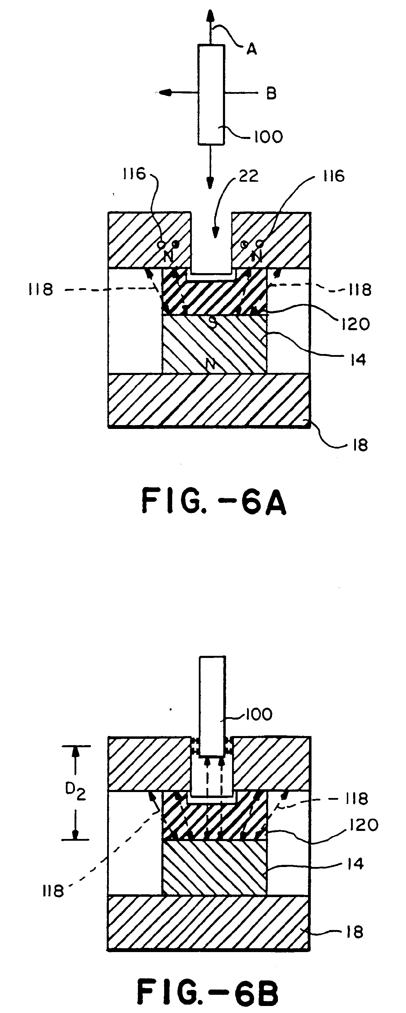

It was discovered, by the inventor, that a field containing member 18 of Figures 2A and 2B having an air gap or slot 22 oriented in a direction substantially parallel to the magnetic flux lines 116 in the field containing member 18 substantially alleviates fringing (or leakage) outside of air gap 22. As is shown in Figs. 2 and 6A, the air gap or slot 22 has a length and a width and the flux lines 116 of the field in field containing member 18 are substantially parallel to the length of the air gap 22. The flux lines 118 of the field which pass from the south pole of magnet 14 to field containing member 18 all pass between magnet 14 and field containing member 18; none of the flux lines 118 extend outside of the physical boundaries of field containing member 18.

The interaction of magnetic unit 12 and capture member 100 creates a magnetic switch. With reference to Figs. 6A, capture member 100 is non-permeated when capture member 100 is outside an air gap 22. As capture member 100 enters air gap 22 (Fig. 6B), the capture member switches to a permeated state. Capture member 100 thus becomes an integral part of the magnetic circuit -- the flux paths 116 and 118 created by magnet 14, and is pulled towards the north pole N of field containing member 18 at the edge of air gap 22. This structure also provides the so-called "black hole" magnetic effect. The result of the black hole magnetic effect is that actuator arm 50 is unaffected by magnetic unit 12 until capture member 100 enters air gap 22.

The pivoting motion of actuator arm 50 allows capture member 100 to move along axis A (Fig. 6A); however, the actuator bearing 66 prevents motion of capture member 100 in axis B. The magnetic forces attempting to move capture member along axis B and the magnetic force attracting capture member 100 towards magnet 14 result in a strong holding force which retains capture member 100 in air gap 22. Bumper 120 limits the travel of capture member 100 (and thus actuator arm 50) along axis A. The holding force is determined by the geometric proportions of the various elements which comprise the magnetic circuit (including field containing member 16 and capture member 100), the strength of the magnetic field in air gap 22, and the thickness of bumper 120. Bumper 120 controls the distance between magnet 14 and capture member 100 and prevents these two elements from contacting each other.

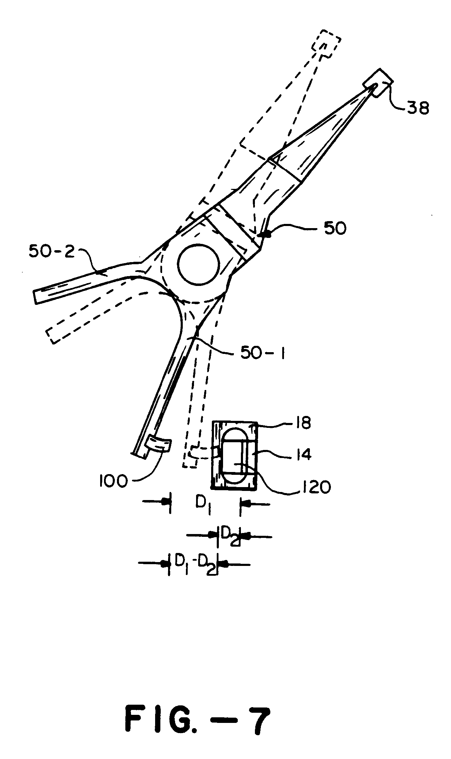

The elimination of fringing allows more of surface of disk 34 to be utilized for data storage. As shown in Fig. 1B the portion of magnetic field 114 which passes through air gap 20 extends a distance D₁ from the surface of magnet 14. On the other hand, as shown in Fig. 6B, the magnetic field 118 extends only a distance D₂ from the surface of magnet 14 and does not leak out of the air gap 22. The difference between distances D₁ and D₂ (D₁-D₂) represents the difference in the point at which capture member 100 enters the magnetic fields 114 and 118 provided by magnetic units 12 and 14, respectively. This relationship is shown in Fig. 7. Further, because head 38 is positioned on actuator arm 50 at a larger distance from the pivot point of actuator arm 50 than capture member 100, the arc which head 38 travels is greater than the arc which capture member 100 travels in traversing the distance D₁-D₂. Accordingly, the radial measurement of the amount of disk space which is saved by using magnetic unit 12 is greater than distance D₁-D₂.

Bumper 120 can function as an inside diameter crash stop. Bumper 120 is formed of a cushioning material, e.g., rubber or foam, which does not introduce an appreciable quantity of particles into the environment of the disk drive.

The actuator arm 50 is released from the magnetic unit 10, 12 by the force generated by actuator 36. The need for a spring to bias a mechanical latch and an electromagnetic unit which continually draws current during operation of the disk drive to release a mechanical latch mechanism are eliminated.

The many features and advantages of the disk drive of the present invention will be apparent to those skilled in the art.

## Claims

1. A magnetic parking device for a disk drive having a data storage medium (34), a transducer (38) for reading information from and writing information to the data storage medium (34), and an actuator (50) for selectively positioning the transducer over a path between a first point and a second point with respect to the data storage medium, comprising:
a magnetically permeable capture member (100) provided on the actuator; and
magnetic parking means (10,12) provided adjacent to the actuator for capturing and magnetically retaining said capture member to park the transducer, said magnetic parking means comprising:
a magnet (14) providing a magnetic field; and
a magnetic field containing member (16,18) having an air gap;
characterised in that;
said air gap comprises a slot (20,22) in said magnetic field containing member; and
the magnetic field flux lines (116) of said magnetic field in said magnetic field containing member are substantially parallel to the length of the slot (20,22) in said magnetic field containing member so that the magnetic field captures the actuator only when the actuator enters the slot (20,22) in said magnetic field containing member,
whereby the capture member is in a non-permeated state over a first portion of the path of the actuator, and the capture member switches to a permeated state over a second portion of the actuator path such that the capture member is positioned proximate to the magnetic parking means and in the magnetic field.

2. A magnetic parking device according to claim 1, wherein said magnetic parking means is positioned opposing the magnetic capture member such that said capture member enters the air gap when the actuator is over the second position of the path of the actuator, without contacting said parking member.

3. A magnetic parking device according to claim 2, wherein the magnet provides magnetic flux, the flux having a direction following a plurality of paths, and the paths of the magnetic flux are substantially contained in the magnetic field containing member and the air gap in the magnetic field containing member.

4. A magnetic parking device according to claim 3, wherein said magnetic parking means captures said capture member only when said capture member enters the air gap in said magnetic field containing member.

5. A magnetic parking device according to claims 3 or 4, wherein there is substantially no magnetic flux leakage outside the air gap.

6. A magnetic parking device according to any one of claims 1 to 5, further comprising means (120) provided on said magnet for preventing contact between said capture member and said magnet and for limiting the movement of the actuator.

7. A magnetic parking device according to any one of claims 1 to 6, wherein the magnetically permeable capture member enters said slot in a direction substantially perpendicular to the length and width of the slot.

8. A magnetic parking device according to any one of claims 1 to 7, wherein said magnetic parking means (10,12) further comprises a magnetic field containing member including an air gap opposite to said magnet (14).

9. A low-power disk drive responsive to a host computer, comprising:
a base plate (32),
a rotatable disk (34) supported on said base plate, said disk having a landing zone (61);
control means for generating control signals;
means, responsive to control signals, for interacting with said disk, comprising:
head means (38) for reading and recording information,
an actuator arm (50) pivotably supported on said base plate for supporting said head means, and
voice coil means (52) for pivoting said actuator arm to selectively position said head means with respect to said disk;
a permeable capture member (100) provided on said actuator arm; and
parking means (12) for parking said head means, including:
magnet means (14) for creating a magnet field, and
a magnet field containing member (18) having an air gap (22);
characterised in that:
said air gap comprises a slot in said magnetic containing member;
the magnetic field flux lines of said magnetic field in said magnetic field containing member are substantially parallel to the length of the slot in said magnetic field containing member so that the magnetic field captures the actuator only when the actuator enters the slot in said magnetic field containing member.

10. A low-power disk drive according to claim 9, wherein said voice coil means releases said capture member from said parking means in response to control signals.

## Patentansprüche

1. Magnetische Parkvorrichtung für einen Plattenantrieb mit einem Datenspeichermedium (34), einem Transducer (38) zum Auslesen von Informationen aus, und zum Einlesen von Informationen in das Datenspeichermedium (34), und mit einem Aktuator (50) zum selektiven Positionieren des Transducers über einen Weg zwischen einem ersten und einem zweiten Punkt in Bezug auf das Datenspeichermedium, umfassend:
ein magnetisch durchlässiges Fangelement (100), das am Aktuator vorgesehen ist; und
ein magnetisches Parkelement (10, 12), das im Bereich des Aktuators vorgesehen ist, um das Fangelement einzufangen und magnetisch festzuhalten, um den Transducer zu parken, wobei das magnetische Parkelement umfaßt:
einen Magneten (14) zum Erzeugen eines Magnetfeldes;
und
ein Magnetfeld-enthaltendes Element (16, 18) mit einem Luftspalt;
dadurch gekennzeichnet,
daß der Luftspalt einen Schlitz (20, 22) im Magnetfeldenthaltenden Element umfaßt, und
daß die magnetischen Feldflußlinien (116) des magnetischen Feldes im Magnetfeld-enthaltenden Element im wesentlichen parallel zur Länge des Schlitzes (20, 22) im Magnetfeldenthaltenden Element verlaufen, so daß das Magnetfeld den Aktuator nur dann einfängt, wenn der Aktuator in den Schlitz (20, 22) im Magnetfeld-enthaltenden Element eintritt,
wobei sich das Fangelement auf einem ersten Teil des Weges des Aktuators in einem nicht permeablen Zustand befindet, und das Fangelement auf einem zweiten Teil des Weges des Aktuators in einen permeablen Zustand umschaltet, so daß das Fangelement in der Nähe des magnetischen Parkelementes und im Magnetfeld positioniert wird.

2. Magnetische Parkvorrichtung nach Anspruch 1, wobei das magnetische Parkelement dem magnetischen Fangelement gegenüberliegend angeordnet ist, so daß das Fangelement in den Luftspalt dann eintritt, wenn sich der Aktuator über der zweiten Position des Weges des Aktuators befindet, ohne das Parkelement zu berühren.

3. Magnetische Parkvorrichtung nach Anspruch 2, wobei der Magnet einen Magnetfluß erzeugt, und der Fluß eine Richtung aufweist, die eine Mehrzahl von Wegen folgt, und die Wege des Magnetflusses im wesentlichen im Magnetfeld-enthaltenden Element enthalten sind, und der Luftspalt im Magnetfeldenthaltenden Element enthalten ist.

4. Magnetische Parkvorrichtung nach Anspruch 3, wobei diese das Fangelement nur dann einfängt, wenn das Fangelement in den Luftspalt im Magnetfeld-enthaltenden Element eintritt.

5. Magnetische Parkvorrichtung nach den Ansprüchen 3 oder 4, wobei außerhalb des Luftspaltes im wesentlichen kein magnetischer Streufluß herrscht.

6. Magnetische Parkvorrichtung nach einem der Ansprüche 1 bis 5, weiterhin umfassend Mittel (120), die am Magneten vorgesehen sind, um einen Kontakt zwischen dem Fangelement und dem Magneten zu verhindern und um die Bewegung des Aktuators zu begrenzen.

7. Magnetische Parkvorrichtung nach einem der Ansprüche 1 bis 6, wobei das magnetisch leitende Fangelement in den Schlitz in einer Richtung eintritt im wesentlichen senkrecht zur Länge und zur Breite des Schlitzes.

8. Magnetische Parkvorrichtung nach einem der Ansprüche 1 bis 7, wobei das magnetische Parkelement (10, 12) weiterhin ein Magnetfeld-enthaltendes Element mit einem dem Magneten (14) gegenüberliegenden Luftspalt aufweist.

9. Plattenantrieb mit geringer elektrischer Leistung für einen Host-Computer, umfassend:
eine Basisplatte (32),
eine drehbare Platte (34), die von der Basisplatte getragen ist und die eine Landezone (61) aufweist;
eine Steuervorrichtung zum Erzeugen von Steuersignalen;
Mittel, die auf die Steuersignale ansprechen, um mit der Platte zusammenzuwirken, umfassend:
einen Kopf (38) zum Auslesen und Aufzeichnen von Informationen,
einen Aktuatorarm (50), der an der Basisplatte schwenkbar gelagert ist, um den Kopf zu tragen, und
eine Tonspule (52) zum Verschwenken des Aktuatorarmes zwecks selektiven Positionierens des Kopfes in Bezug auf die Platte;
ein permeables Fangelement (100), das am Aktuatorarm vorgesehen ist;
und
ein Parkelement (12) zum Parken des Kopfes, umfassend:
einen Magneten (14) zum Erzeugen eines Magnetfeldes sowie ein Magnetfeld-enthaltendes Element (18) mit einem Luftspalt (22),
dadurch gekennzeichnet,
daß der Luftspalt einen Schlitz im Magnetfeld-enthaltenden Element aufweist, und
daß die magnetischen Feldflußlinien im Magnetfeld im genannten Magnetfeld-enthaltenden Element im wesentlichen parallel zur Länge des Schlitzes im Magnetfeld-enthaltenden Element verlaufen, so daß das Magnetfeld den Aktuator nur dann einfängt, wenn der Aktuator in den Schlitz im Magnetfeld-enthaltenden Element eintritt.

10. Plattenantrieb geringer elektrischer Antriebsleistung entsprechend Anspruch 9, wobei die Tonspule das Fangelement vom Parkmittel in Abhängigkeit von Steuersignalen freigibt.

## Revendications

1. Dispositif de positionnement magnétique pour une unité de disque, ayant un milieu de stockage de données (34), un transducteur (38) pour lire une information dans et écrire une information sur le milieu de stockage de données (34), et un organe d'actionnement (50) pour positionner sélectivement le transducteur sur un chemin entre un premier point et un deuxième point par rapport au milieu de stockage de données, comprenant :
un organe de capture (100) perméable magnétiquement, prévu sur l'organe d'actionnement ; et
des moyens de positionnement magnétique (10, 12) prévus adjacents à l'organe d'actionnement, pour capturer et retenir magnétiquement ledit organe de capture en vue de positionner le transducteur, ledit moyen de positionnement magnétique comprenant :
un aimant (14) produisant un champ magnétique ; et
un organe (16, 18) contenant un champ magnétique, ayant un entrefer ;
caractérisé en ce que :
ledit entrefer comprend une fente (20, 22) dans ledit organe contenant un champ magnétique ; et
les lignes de flux de champ magnétique (116) dudit champ magnétique se trouvant dans ledit organe contenant un champ magnétique sont sensiblement parallèles à la longueur de la fente (20, 22) se trouvant dans ledit organe contenant un champ magnétique, de manière que le champ magnétique ne capture l'organe d'actionnement que lorsque cet organe d'actionnement entre dans la fente (20, 22) située dans ledit organe contenant un champ magnétique,
dans lequel l'organe de capture se trouve à un état non imprégné sur une première partie du chemin de l'organe d'actionnement, et l'organe de capture passe à un état imprégné sur une deuxième partie du chemin de l'organe d'actionnement, de manière que l'organe de capture soit placé à proximité du moyen de positionnement magnétique et dans le champ magnétique.

2. Dispositif de positionnement magnétique selon la revendication 1, dans lequel ledit moyen de positionnement magnétique est placé à l'opposé de l'organe de capture magnétique, de manière que ledit organe de capture entre dans l'entrefer lorsque l'organe d'actionnement se trouve sur la deuxième position du chemin de l'organe d'actionnement, sans entrer en contact avec ledit organe de positionnement.

3. Dispositif de positionnement magnétique selon la revendication 2, dans lequel l'aimant fournit un flux magnétique, le flux ayant une direction suivant une pluralité de chemins, et les chemins du flux magnétique sont essentiellement contenus dans l'organe contenant un champ magnétique et l'entrefer situé dans l'organe contenant un champ magnétique.

4. Dispositif de positionnement magnétique selon la revendication 3, dans lequel ledit moyen de positionnement magnétique ne capture ledit organe de capture que lorsque ledit organe de capture entre dans l'entrefer situé dans ledit organe contenant un champ magnétique.

5. Dispositif de positionnement magnétique selon la revendication 3 ou 4, dans lequel il n'existe pratiquement pas de fuite de flux magnétique depuis l'entrefer.

6. Dispositif de positionnement magnétique selon l'une quelconque des revendications 1 à 5, comprenant en outre un moyen (120) prévu sur ledit aimant pour empêcher tout contact entre ledit organe de capture et ledit aimant et pour limiter le déplacement de l'organe d'actionnement.

7. Dispositif de positionnement magnétique selon l'une quelconque des revendications 1 à 6, dans lequel l'organe de capture perméable magnétiquement entre dans ladite fente, dans une direction sensiblement perpendiculaire à la longueur et à la largeur de la fente.

8. Dispositif de positionnement magnétique selon l'une quelconque des revendications 1 à 7, dans lequel ledit moyen de positionnement magnétique (10, 12) comprend en outre un organe contenant un champ magnétique comportant un entrefer opposé audit aimant (14).

9. Unité de disque à faible puissance sensible à un ordinateur central, comprenant :
une plaque de base (32),
un disque rotatif(34) monté sur ladite plaque de base, ledit disque ayant une zone d'appui (61)
un moyen de commande pour produire des signaux de commande ;
un moyen, sensible aux signaux de commande, pour coopérer avec ledit disque, comprenant :
un moyen formant tête (38) pour lire et enregistrer une information,
un bras d'actionnement (50) monté pivotant sur ladite plaque de base en vue de supporter ledit moyen formant tête, et
un moyen formant bobine mobile (52) pour faire pivoter le bras d'actionnement en vue de positionner sélectivement ledit moyen formant tête par rapport audit disque ;
un organe de capture (100) perméable prévu sur ledit bras d'actionnement ; et
un moyen de positionnement (12à) pour positionner ledit moyen formant tête, comprenant :
un moyen formant aimant (14) pour créer un champ magnétique, et
un organe (18) contenant un champ magnétique ayant un entrefer (22) ;
caractérisée en ce que :
ledit entrefer comprend une fente dans ledit organe contenant un champ magnétique ;
les lignes de flux de champ magnétique dudit champ magnétique dans ledit organe contenant un champ magnétique sont sensiblement parallèles à la longueur de la fente dans ledit organe contenant un champ magnétique, de manière que le champ magnétique ne capture l'organe d'actionnement que lorsque l'organe d'actionnement entre dans la fente située dans l'organe contenant un champ magnétique.

10. Unité de disque à faible puissance selon la revendication 9, dans laquelle ledit moyen formant bobine mobile libère ledit organe de capture dudit moyen de positionnement en réponse à des signaux de commande.
